# EUROPEAN PATENT APPLICATION

(11) **EP 3 031 707 A2**
(43) Date of publication of application: **15.06.2016**
(21) Application number: 15195485.6
(22) Date of filing: 19.11.2015
(51) Int. Cl.: B62J 27/00, B60K 28/14, B60R 21/0132, F02D 9/10

(54) **METHOD AND CONTROL UNIT FOR ASCERTAINING THE TIP-OVER OF A MOTORCYCLE**

(30) Priority: 19.11.2014 IT BO20140650
(71) Applicant: Magneti Marelli S.p.A., 20011 Corbetta (MI) (IT)
(72) Inventor: FIORENTINI, Maurizio, 40062 Molinella (IT); GROSSI, Claudio, 40057 Quarto Inferiore (IT); CAROSATI, Paolo, 40133 Bologna (IT); LATTANZIO, Stefano, 10137 Torino (IT)
(74) Representative: Maccagnan, Matteo

(57) **Abstract**

A control method for ascertaining the tip-over of a motorcycle (1), wherein acceleration values along three reciprocally perpendicular measurement axes (X, Y, Z) by means of a triaxial accelerometer sensor rigidly connected to the motorcycle (1) are measured and then the three acceleration values along the three measurement axes (X, Y, Z) are used to ascertain a possible tip-over of the motorcycle (1).

## Description

### TECHNICAL FIELD

The present invention relates to a method and a control unit for ascertaining the tip-over (falling) of a motorcycle.

### PRIOR ART

A function which stops the engine (i.e. cancels the generation of torque) and the fuel pump on motorcycles in case of tipping-over (falling) of the motorcycles themselves has been implemented on motorcycles over the past years; in other words, if the motorcycle tips over both the engine and the fuel pump are automatically and rapidly stopped to avoid exposing the driver (or other people who may interact with the motorcycle) to unnecessary dangers.

In order to ascertain the tip-over of a motorcycle, tip-over sensors, which are external to an electronic control unit which governs the operation of the motorcycle and which are connected to the electronic control unit itself by means of a cable, are used. Tip-over sensors were initially of the mechanical type, i.e. included the presence of a body left free to move by effect of the force of gravity. Subsequently, electronic type tip-over sensors were also introduced, which have the advantage of being lighter and more compact than the previous mechanical type tip-over sensors.

However, the reliability of the currently marketed electronic type tip-over sensors is relatively modest because they may often incorrectly indicate a nonexistent tip-over of the motorcycle or may not indicate an actual tip-over of the motorcycle. Generally, the lack of the reliability of the currently marketed electronic type tip-over sensors is due to the high tip-over detection sensitivity with respect to the existing departures between the actual (real) working conditions and the nominal (desired) working conditions; such departures may be due to the constructive dispersion of the electronic component features, to the creep of electronic component features over time and to assembly inaccuracy of the tip-over sensor. With this regard, it is worth noting that the currently marketed electronic type tip-over sensors normally require a very precise positioning and orientation in order to work correctly; such a limitation is particularly problematic in case of maintenance or repair operation subsequent to the manufacturing of the motorcycle, because the mechanic who intervenes on the motorcycle may not be able to assemble the tip-over sensor with the necessary accuracy.

### DESCRIPTION OF THE INVENTION

It is the object of the present invention to provide a method and a control unit for ascertaining the tip-over of a motorcycle, such method and control unit being free from the drawbacks illustrated above and, in particular, being easy and cost-effective to make.

According to the present invention, a method and a control for ascertaining the tip-over of a motorcycle, as established in the accompanying claims are provided.

### BRIEF DESCRIPTION OF THE DRAWINGS

The present invention will now be described with reference to the accompanying drawings, which show a non-limitative embodiment thereof, in which:
figure 1 is a diagrammatic side view of a motorcycle provided with a control unit made according to the present invention;
figure 2 is a perspective view of a throttle valve of the motorcycle of the figure 1;
figure 3 is an exploded plan view of the throttle valve in figure 2; and
figures 4, 5 and 6 are three front, diagrammatic views of the motorcycle in figure 1 in vertical position, in inclined position when leaning and in tip-over position, respectively, also with indication of the values assumed by the accelerations measured by a triaxial accelerometer sensor integral with the motorcycle.

### PREFERRED EMBODIMENTS OF THE INVENTION

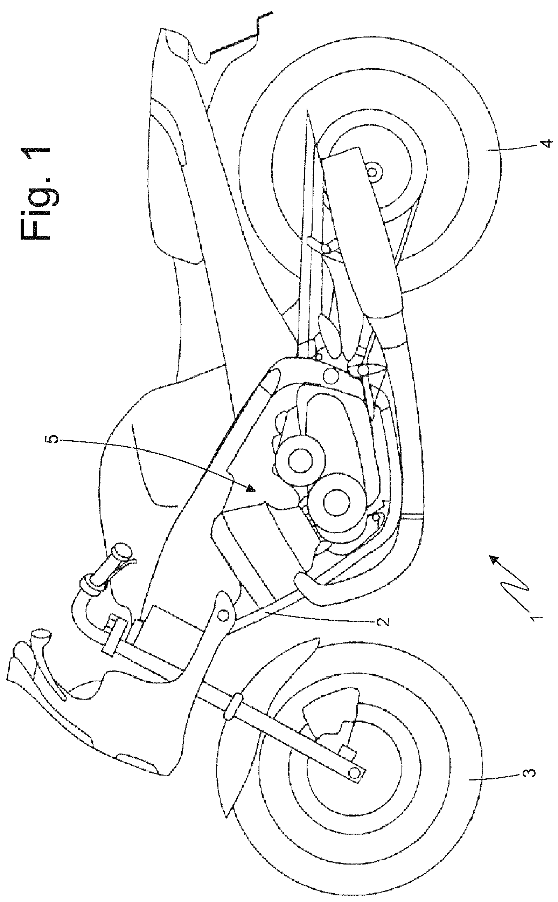

In figure 1, reference numeral 1 indicates as a whole a motorcycle comprising a frame 2, which supports a front wheel 3 by means of a front suspension, a rear wheel 4 by means of rear suspension, and an internal combustion engine 5 fueled with gasoline or the like.

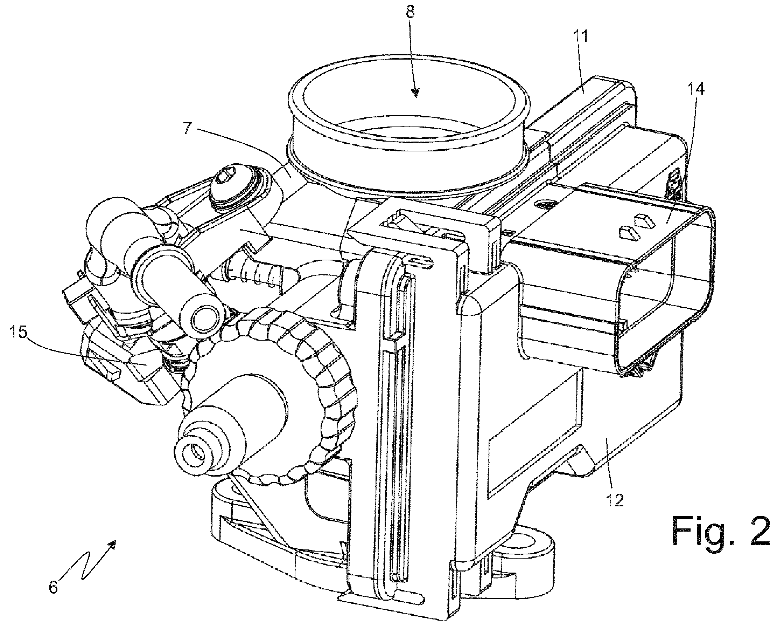

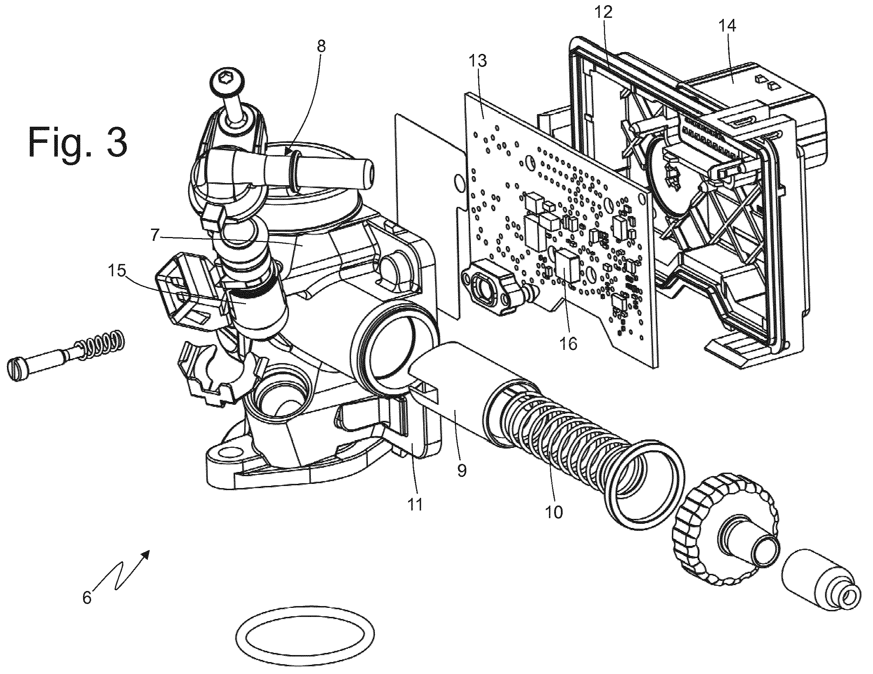

As shown in figures 2 and 3, the internal combustion engine 5 comprises a throttle valve 6 which regulates the fresh air intake. The throttle valve 6 comprises a valve body 7, in which a circular section tubular feeding pipe 8 is obtained through which the air taken in by the internal combustion engine 5 flows. Furthermore, the throttle valve 2 comprises a cylindrical shutter 9, which engages the feeding pipe 8 and shifts axially between a maximum opening position and a closing position of the feeding pipe 8. In particular, the shutter 9 is pushed by a closing spring 10 towards the closing position of the feeding pipe 8 and is pulled towards the maximum opening position thus comprising the closing spring 10 by effect of the action of a Bowden cable (known and not shown) mechanically connected to a throttle grip.

The valve body 2 comprises a chamber 11, which is arranged by the side of the feeding pipe 8, is closed by a lid 12, and houses an electronic control unit 13 which governs the operation of the internal combustion engine 5 (i.e. the electronic control unit 13 performs the so-called "engine control" function).

According to a preferred embodiment, the electronic control unit 13 integrates a pressure sensor, which is in pneumatic contact with the feeding pipe 8 downstream of the shutter 9 and measures the intake pressure in real time (obviously downstream of the shutter 9). According to a preferred embodiment, the electronic control unit 13 also implements anti-theft operations, i.e. inhibiting the starting of the internal combustion engine 5 provided by the immobilizer function, in addition to the required main operations dedicated to starting/stopping, diagnosing and controlling the internal combustion engine 5. More details on the integration of the immobilizer function in the electronic control unit 13 are present in Patent EP1746273B1.

As shown in figures 2 and 3, the lid 12 is provided with a female electric connector 14, which allows to connect the electronic control unit 13 to the other parts of the motorcycle 1.

According to a possible (but not binding) embodiment illustrated in the accompanying figures, the valve body 2 also supports a fuel injector 15 which is governed by the electronic control unit 13 and injects the fuel into the feeding pipe 8 downstream of the shutter 9.

According to an alternative embodiment (not shown), the shutter 9 is plate-shaped and is rotationally mounted in the feeding pipe 8 to rotate between the maximum opening position and the closing position of the feeding pipe 8. In this embodiment, the electronic control unit 13 may integrate a rotational position sensor (i.e. an angular encoder), which detects the actual angular position of the shutter 9.

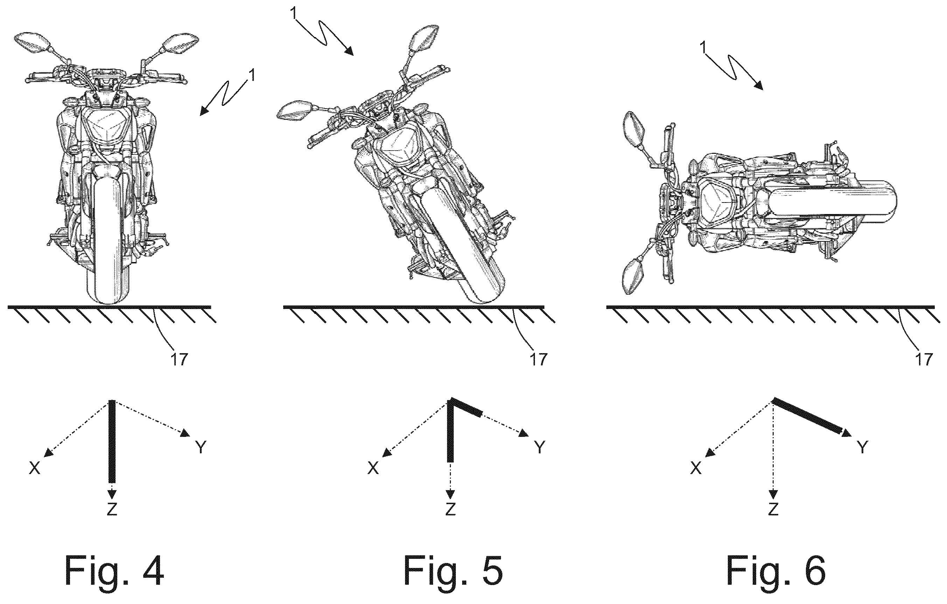

The electronic control unit 13 integrates therein (and thus comprises) a triaxial accelerometer sensor 16, which is adapted to measure the acceleration values aₓ, a_{y} and a_{z} along three measurement axes X,Y,Z which are perpendicular to one another (diagrammatically shown in figures 4, 5 and 6). Conventionally, the X axis is the longitudinal axis (corresponding to the direction of advancement of the motorcycle 1) and is arranged horizontally, the Y axis is transversal, perpendicular to the longitudinal X axis and arranged horizontally and the Z axis is the vertical axis, is perpendicular to the longitudinal X axis and to the transversal Y axis and is arranged vertically. It is worth noting that the triaxial accelerometer sensor 16 is rigidly connected to the electronic control unit 13, which is, in turn, rigidly connected to the valve body 7 of the throttle valve 6, which, in turn, is rigidly connected to the internal combustion engine 5, and thus to the frame 2 of the motorcycle 1; consequently, the triaxial accelerometer sensor 16 is rigidly connected to the frame 2 of the motorcycle 1 in fixed position.

Furthermore, the electronic control unit 13 integrates therein (and thus comprises) a processing device, which uses the three acceleration values aₓ, a_{y} and a_{z} along the three measurement axes X,Y,Z to ascertain a possible tipping-over (falling) of the motorcycle 1; it is worth noting that such a processing device cannot be physically identified in the electronic control unit 13 but is virtually implemented in the software of the electronic control unit 13.

As shown in figure 4, when the motorcycle is vertical (i.e. in normal position when traveling on a straight line on the road surface 17), the longitudinal acceleration value aₓ (i.e. measured along the longitudinal X axis) is zero (assuming that the motorcycle 1 is neither accelerating nor braking), the transversal acceleration value a_{y} (i.e. measured along the transversal Y axis) is zero, and the vertical acceleration value a_{z} (i.e. measured along the vertical Z axis) is equal to gravitational acceleration (approximately 9.8 m/sec2).

As shown in figure 5, when the motorcycle is leaning (i.e. in normal position when cornering on the road surface 17), the longitudinal acceleration value aₓ (i.e. measured along the longitudinal X axis) is zero (assuming that the motorcycle 1 is neither accelerating or braking), the transversal acceleration value a_{y} (i.e. measured along the transversal Y axis) is higher than zero and lower than gravitational acceleration by effect of the leaning and the centrifuge force, and the vertical acceleration value a_{z} (i.e. measured along the vertical Z axis) is higher than zero and lower than gravitational acceleration by effect of the leaning of the motorcycle 1.

As shown in figure 6, after the motorcycle has tipped over (and thus rests laterally on the road surface 17), the longitudinal acceleration value aₓ (i.e. measured along the longitudinal X axis) is zero (assuming that the motorcycle 1 is stationary), the transversal acceleration value a_{y} (i.e. measured along the transversal Y axis) is equal to the gravitational acceleration and the vertical acceleration value a_{z} is zero.

According to a possible embodiment, the tip-over of the motorcycle 1 is ascertained when the longitudinal acceleration value aₓ (i.e. measured along the longitudinal X axis) or the transversal acceleration value a_{y} (i.e. measured along the transversal Y axis) are higher than a threshold value T1; preferably, the tip-over of the motorcycle 1 is ascertained when the longitudinal acceleration value aₓ (i.e. measured along the longitudinal X axis) or the transversal acceleration value a_{y} (i.e. measured along the transversal Y axis) are continuously higher than the threshold value T1 for a predetermined interval of time (in the order of 1-5 seconds).

According to a possible embodiment, the tip-over of the motorcycle 1 is ascertained when the vertical acceleration value a_{z} (i.e. measured along the vertical Z axis) is lower than a threshold value T2; preferably, the tip-over of the motorcycle 1 is ascertained when the vertical acceleration value a_{z} (i.e. measured along the vertical Z axis) is continuously lower than the threshold value T2 for a predetermined interval of time (in the order of 1-5 seconds).

The two criteria expressed above may be used alternatively or in combination; in the latter case, the tip-over of the motorcycle 1 is ascertained when the longitudinal acceleration value aₓ or the transversal acceleration value a_{y} are higher than the threshold value T1 and simultaneously the vertical acceleration value a_{z} is lower than the threshold value T2 (possibly continuously for a predetermined interval of time).

The threshold values T1 and T2 are established as a function of gravitational acceleration so that the threshold values T1 and T2 are equal to a fraction of the gravitational acceleration itself.

According to a different approach (which leads to the same result, in all cases), it is possible to ascertain the orientation in space of the acceleration vector by combining the three acceleration values aₓ, a_{y}, a_{z} along the three measurement axes X,Y,Z, thus it is possible to ascertain the orientation in space of the motorcycle 1 as a function of the orientation in space of the acceleration vector and as a function of the orientation in space of the triaxial accelerometer sensor 16 with respect to the motorcycle 1, and finally it is possible to ascertain a possible tip-over of the motorcycle 1 as a function of the orientation in space of the motorcycle 1 (i.e. if the leaning angle of the motorcycle 1 with respect to the vertical is higher than a threshold value possibly for a predetermined interval of time without interruptions).

According to a preferred embodiment, a "one-time" step of calibrating is carried out (typically at the end of the assembly line of the motorcycle 1) in which the actual measurements of the triaxial accelerometer sensor 16 are learned so as to be able to compensate for the systematic errors (due to the electronic component feature construction dispersion and to assembly inaccuracies). In particular, during the "one-time" step of calibration, the motorcycle 1 is arranged in a predetermined calibration position; generally (but not mandatorily) the motorcycle 1 is vertical in the predetermined calibration position (as shown in figure 4) so that the longitudinal acceleration value aₓ and the transversal acceleration value a_{y} is equal to gravitational acceleration in the predetermined calibration position.

Once the motorcycle 1 has been arranged in the predetermined calibration position the acceleration values aₓ, a_{y}, a_{z} along the three measurement axes X,Y,Z are measured (again during the "one-off" step of calibrating); several measurements are normally carried out to determine mathematical means values which allow to abate the negative effects of accidental measurement errors and disturbances. Finally, the (mean) acceleration values (aₓ, a_{y}, a_{z}) measured when the motorcycle 1 is in the predetermined calibration position are used to compensate possible systematic errors of the triaxial accelerometer sensor 16; for example, the acceleration values aₓ, a_{y}, a_{z} measured when the motorcycle 1 is in the predetermined calibration position are used to calculate corresponding compensation addenda, which are algebraically added to the acceleration values aₓ, a_{y}, a_{z} measured by the triaxial accelerometer sensor 16 at the end of the "one-time" step of calibrating.

Making a numeric example, when the motorcycle 1 is in the predetermined calibrating position, the longitudinal acceleration value aₓ could be zero; if instead the longitudinal acceleration value aₓ measured by the triaxial accelerometer sensor 16 is equal, for example, to +0.5 m/sec2, then a compensation addendum equal to -0.5 m/sec² is calculated, which will be added, again algebraically (i.e. taking the sign into account), to the longitudinal acceleration value aₓ measured by the triaxial accelerometer sensor 16.

According to a preferred embodiment, the acceleration values aₓ, a_{y}, a_{z} measured by the triaxial accelerometer sensor 16 are always filtered in advance by a low-pass filter (having a relatively low cut-off threshold, for example in the order of 1-4 Hz) to eliminate possible high-frequency disturbances and to eliminate the most dynamic component of the signal which is not significant for ascertaining a possible tip-over of the motorcycle 1.

When a tip-over of the motorcycle 1 is detected, as described above, the electronic control unit 13 stops the internal combustion engine 5 (i.e. cancels the generation of torque) and the fuel pump.

According to a possible embodiment, the electronic control unit 13 could also use the acceleration values aₓ, a_{y}, a_{z} measured by the triaxial accelerometer sensor 16 to monitor the dynamics of the motorcycle 1 and/or to control the generation of torque; for example, the torque could be cut off in case of slipping of the rear drive wheel 4, and the slipping of the rear drive wheel 4 may be ascertained by comparing the longitudinal acceleration value a_{y} with the angular acceleration of the drive shaft of the internal combustion engine 5.

The method described above for ascertaining the tip-over of a motorcycle 1 has many advantages.

Firstly, the method described above for ascertaining the tipping-over of the motorcycle 1 is extremely effective and reliable because it allows to always recognize the tip-over of the motorcycle 1 without errors (i.e. without false positives). Such a result is obtained by virtue of the fact that using the three different acceleration values aₓ, a_{y}, a_{z} at the same time guarantees a redundancy (and thus an intrinsic robustness) in recognizing the tip-over of the motorcycle 1; in other words, the tip-over is only recognized if the values aₓ, a_{y}, a_{z} of three different accelerations are all coherent in indicating the presence of a tip-over of the motorcycle 1.

Furthermore, the method described above for ascertaining the tip-over of a motorcycle 1 is easy and cost-effective to implement, because it only requires the addition of the triaxial accelerometer sensor 16, which can be easily and directly integrated in the electronic control unit 13 with modest additional costs and no further increase of weight, dimensions or assembly complexity.

Finally, the method described above for ascertaining the tip-over of the motorcycle 1 is particularly accurate because it allows to perform a "one-time" step of calibrating which allows to cancel (compensate for) the inevitable systematic errors in the measurements of the triaxial accelerometer sensor 16.

## Claims

1. A control method for ascertaining the tip-over of a motorcycle (1); the control method comprises the steps of:
measuring the acceleration values (aₓ, a_{y}, a_{z}) along three reciprocally perpendicular measurement axes (X,Y,Z) by means of a triaxial accelerometer sensor (16) rigidly connected to the motorcycle (1); and
using the three acceleration values (aₓ, a_{y}, a_{z}) along the three measurement axes (X,Y,Z) to ascertain a possible tip-over of the motorcycle (1).

2. A control method according to claim 1, and comprising the further step of ascertaining the tip-over of the motorcycle (1) when the acceleration value (aₓ) along a longitudinal axis (X) or the acceleration value (a_{y}) along a transversal axis (y) are higher than a first threshold value (T1).

3. A control method according to claim 1 or 2, and comprising the further step of ascertaining the tip-over of the motorcycle (1) when the acceleration value (a_{z}) along a vertical axis (Z) is lower than a second threshold value (T2).

4. A control method according to claim 2 or 3, and comprising the further step of establishing the threshold values (T1 T2) as a function of gravitational acceleration so that the threshold values (T1, T2) are equal to a fraction of the gravitational acceleration itself.

5. A control method according to claim 1 and comprising the further steps of:
ascertaining the orientation in space of the acceleration vector by combining the three acceleration values (aₓ, a_{y}, a_{z}) along the three measurement axes (X,Y,Z);
ascertaining the orientation in space of the motorcycle (1) as a function of the orientation in space of the triaxial accelerometer sensor (16) with respect to the motorcycle (1); and
ascertaining a possible tip-over of the motorcycle (1) as a function of the orientation in space of the motorcycle (1).

6. A control method according to any of the claims from 1 to 5 and comprising the further steps of:
arranging the motorcycle (1) in a predetermined calibration position during a "one-time" step of calibrating;
measuring the acceleration values (aₓ, a_{y}, a_{z}) along the three measurement axes (X,Y,Z) when the motorcycle (1) is in the predetermined calibration position during the "one-time" step of calibrating; and
using the acceleration values (aₓ, a_{y}, a_{z}) measured when the motorcycle (1) is in the predetermined calibration position for compensating for possible systematic errors of the triaxial accelerometer sensor (16).

7. A control method according to claim 6, wherein the motorcycle (1) is vertical so that in the predetermined calibration position the acceleration value (aₓ) along a longitudinal axis (X) and the acceleration value (a_{y}) along a transversal axis (y) are zero and the acceleration value (a_{z}) along a vertical axis (Z) is equal to gravitational acceleration in the predetermined calibration position.

8. A control method according to claim 6 or 7, comprising the further step of using the acceleration values (aₓ, a_{y}, a_{z}) measured when the motorcycle (1) is in the predetermined calibration position to calculate the corresponding compensation addenda which, at the end of the "one-time" step of calibrating, are algebraically added to the acceleration values (aₓ, a_{y}, a_{z}) measured by the triaxial accelerometer sensor (16).

9. A control method according to one of the claims from 1 to 8, comprising the further step of filtering the acceleration values (aₓ, a_{y}, a_{z}) measured by the triaxial accelerometer sensor (16) by means of a low-pass filter.

10. A control unit for ascertaining the tip-over of a motorcycle (1); the control unit comprises:
a triaxial accelerometer sensor (16) which can be rigidly connected to the motorcycle (1) measures the acceleration values (aₓ, a_{y}, a_{z}) along the three reciprocally perpendicular measurement axes (X,Y,Z); and
a processing device which uses the three acceleration values (aₓ, a_{y}, a_{z}) along the three measurement axes (X,Y,Z) to ascertain a possible tip-over of the motorcycle (1).

11. A throttle valve (6) for an internal combustion engine (5) of a motorcycle (1); the throttle valve (6) comprises:
a valve body (2);
a tubular feeding pipe (8), which is defined in the valve body (2) and through which the air taken in by the internal combustion engine (5) flows;
a shutter (9), which is arranged inside the feeding pipe (8) to move between a maximum opening position and closing position of the feeding pipe;
a chamber (11), which is obtained in the valve body (2), is arranged by the side of the feeding pipe (8) and is closed by a removable lid (12); and
an electronic control unit (13), which is housed in the chamber (11) and governs the operation of the internal combustion engine (5);
the throttle valve (6) is **characterized in that** the electronic control unit (13) integrates therein:
a triaxial accelerometer sensor (16), which can be rigidly connected to the motorcycle (1) and measures the acceleration values (aₓ, a_{y}, a_{z}) along the three reciprocally perpendicular measurement axes (X,Y,Z); and
a processing device which uses the three acceleration values (aₓ, a_{y}, a_{z}) along the three measurement axes (X,Y,Z) to ascertain a possible tip-over of the motorcycle (1).
